# EUROPÄISCHE PATENTSCHRIFT

(11) **EP 0 367 760 B1**
(45) Veröffentlichungstag und Bekanntmachung des Hinweises auf die Patenterteilung: **06.10.1993**
(21) Anmeldenummer: 88901552.5
(22) Anmeldetag: 12.02.1988
(51) Int. Cl.: H02K 53/00, H02N 11/00

(54) **Rotationsvorrichtung mit Permanentmagneten**
Rotable apparatus comprising permanent magnets
Dispositif rotatif comprenant des aimants permanents

(43) Veröffentlichungstag der Anmeldung: 16.05.1990
(73) Patentinhaber: HAGEDORN, Wolfgang, D-34225 Baunatal (DE)
(72) Erfinder:
(86) Internationale Anmeldenummer: DE8800071
(87) Internationale Veröffentlichungsnummer: WO8907857

(56) Entgegenhaltungen:
- DE-A- 2 029 553
- FR-A- 604 191
- US-A- 2 779 885
- US-A- 4 598 221
- US-A- 4 600 849

## Beschreibung

Die Erfindung betrifft eine Rotationsvorrichtung mit Permanentmagneten (s. z.B. US-A-4 600 849).

Die physikalischen Erscheinungsformen und Phänomene des Permanent- und Elektromagnetismus, insbesondere der Anziehung ungleicher- und Abstoßung gleicher Magnetpole, der Induktion und des magnetischen Feldes sind Theorien, die sich in experimentellen, elektrodynamischen und mathematischen Belegen zu Gesetzmäßigkeiten, wie z.B. von Ampère, Coulomb, Faraday, Gauß, Lenz, Lorentz, Maxwell und Oersted verdichtet haben.

Der Erfindung liegt die Aufgabe zugrunde, eine Vorrichtung zur experimentellen Untersuchung des Magnetismus zu schaffen. Diese Aufgabe wird durch die Merkmale des Anspruchs 1 gelöst.

Die Erfindung wird im folgenden anhand von zwei Ausführungsformen unter Bezugnahme auf die beigefügten Zeichnungen näher beschrieben.

Es zeigen :
- Fig. 1: Eine erste Ausführungsform der erfindungsgemäßen Vorrichtung in einer Seitenansicht.
- Fig. 2: Eine zweite Ausführungsform der erfindungsgemäßen Vorrichtung.
- Fig. 3: Die Abwicklung des in Fig. 2 beteiligten Stator-Permanentmagneten mit der Bewegungskurve ( C ) eines Läufer-Permanentmagneten.

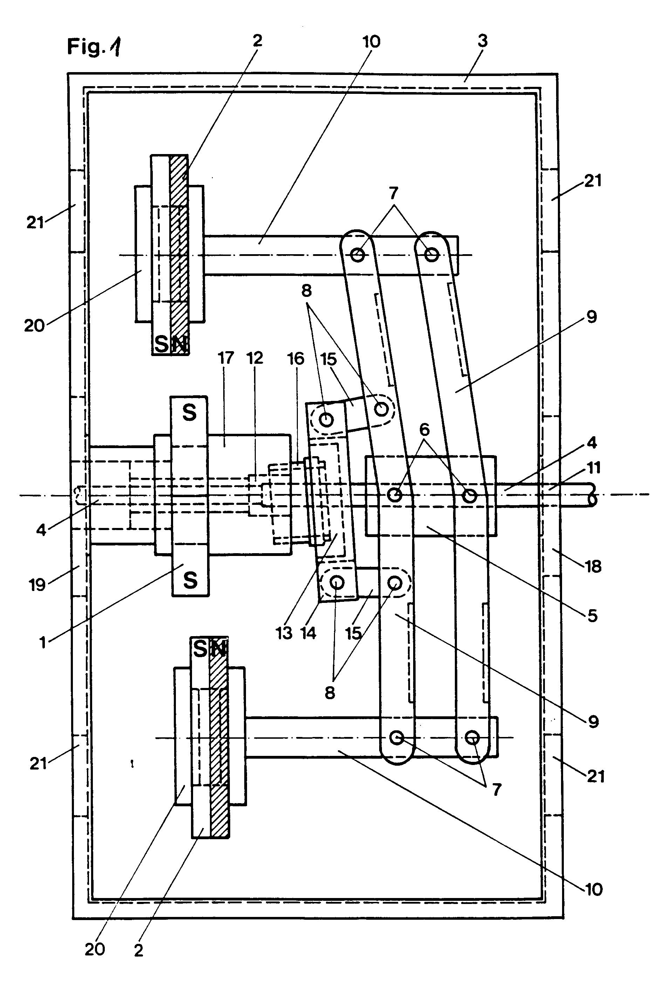

Fig. 1 zeigt die Seitenansicht einer Ausführungsform der erfindungsgemäßen Vorrichtung. Speziell bei dieser Ausführung ist es wahlweise möglich, die Rotationsachse (4) durch eine 90^{o}-Schwenkung des Rahmens (3) horizontal oder vertikal anzuordnen.

Der Rahmen (3) besteht aus einander zugekehrten L-Profilen. Zwei komplette rechteckige Rahmenverbindungen sind mit einem Zwischenabstand durch die Verbindungsstege (21) deckungsgleich verbunden.

Mittig im Rahmen (3) ist der Zentralständer (17) mittels Flansch (19) angeschraubt. Der Zentralständer (17) besteht aus zwei miteinander verschraubten Teilen. Zwischen seinem Ober- und Unterteil ist der zentrale Statormagnet (1) eingespannt und durch Gewindedruck justiert.
Sein Unterteil bildet mit dem Flansch (19) ein Stück und sorgt für die exakt horizontale, bzw. vertikale Ausrichtung des Statormagneten (1).
Das Oberteil trägt in zentraler Bohrung das untere Achslager (12) und in dezentrisch, minimal schräger Bohrung die Lagerhülse (16).
Zwischen dieser Lagerhülse (16) und der Steuerscheibe (14) befindet sich das leichtgängige axiale Steuerlager (13). Über die zwei Steuerhebel (15), die in den Steuergelenken (8) leichtbeweglich geführt werden, wird die Neigung des Steuerlagers (13) permanent auf die Läuferarme (9) übertragen.
Diese Niveaudifferenz bewegt die Läuferarme pro einer vollen Umdrehung sinusförmig auf und ab.
Die Läuferarme (9) bestehen aus einem leicht in sich gekröpften U-Profil, dessen Verbindungssteg bis auf einen geringen Teil ausgespart ist. In der mittigen Aussparung sind die Seitenflächen des Profils über die Wipplager (6) mit dem Läuferflansch (5) und der Rotationsachse (4) verbunden.
An den äußeren Aussparungen der Läuferarme (9) befinden sich die Parallelgelenke (7), über die die Läuferständer (10) leichtgängig geführt werden.
Zwischen einem Bund der Läuferständer (10) und der Gegenscheibe (20) ist der Läufermagnet (2) mit Gewindedruck eingespannt und arretiert.

Im Lagerflansch (18) befindet sich das Achslager (11), das die Rotationsachse (4) zentrisch führt.
Die Verlängerung der Rotationsachse (4) über das untere Achslager (12) hinaus, und die oberflächenplan ausgeführten Verbindungsstege (21) ermöglichen die Koppelung mehrerer Antriebseinheiten.

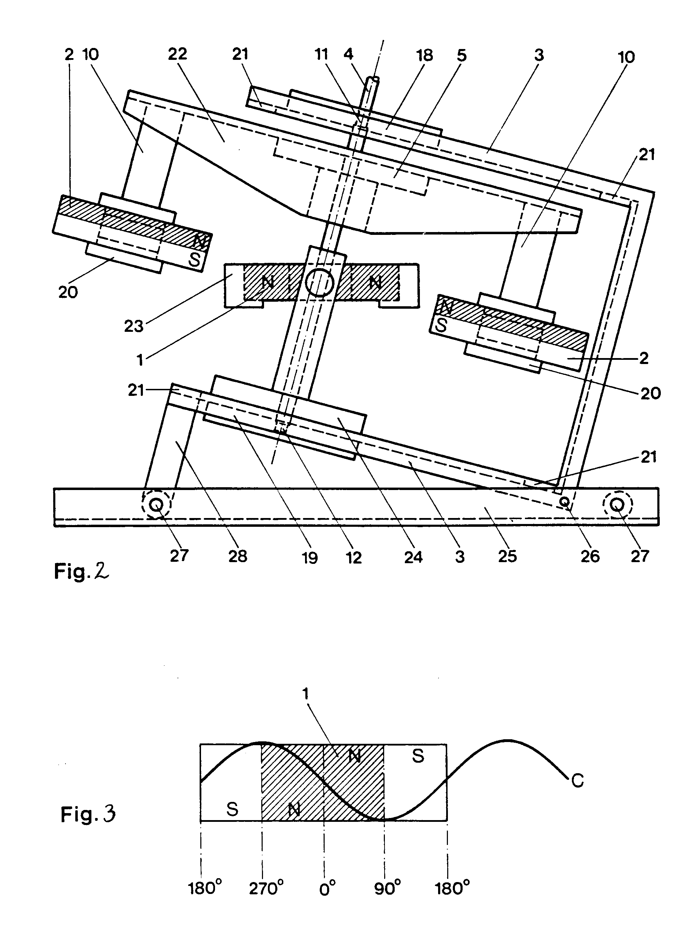

Eine weitere Ausführungsform der erfindungsgemäßen Vorrichtung zeigt Fig. 2.

Die erforderliche Niveaudifferenz wird hier allein durch die Neigung der Rotationsachse (4) erreicht. Der Wegfall von Reibungsverlusten durch diese Steuerung erlaubt kleinste Leistungen und geringe Abmessungen.

Auch dieser Rahmen (3) besteht aus L-Profilen, die hier zur Materialminderung als zwei deckungsgleiche U-Formen ausgebildet sind. Die exakte Parallelität beider Rahmenteile wird auch hier durch die Verbindungsstege (21) erreicht.

Der Rahmen (3) ist zur Erzielung der Achsneigung im Kipplager (26) gegen die Horizontalschienen (25) angehoben und mittels des Arretierbolzens (28) in dieser Stellung fixiert.
Die zwei Horizontalschienen (25) bilden das Standfundament dieser Einheit und werden mittels der Distanzbolzen (27) parallel gehalten. Einer dieser Distanzbolzen (27) bildet den Fußpunkt des Arretierbolzens (28), während sein Kopfteil mit einem Verbindungssteg (21) verschraubt ist.

Die Rotationsachse (4) wird durch das untere Achslager (12) im unteren Flansch (19) und durch das obere Achslager (11) im oberen Flansch (18) zentrisch geführt.

Über den Läuferflansch (5) ist der Läuferträger (22) mit der Rotationsachse (4) verbunden. Der Läuferträger (22) besteht aus einem nach unten offenen U-Profil, dessen Seitenschenkel zu seinen Enden hin abgeschrägt sind. An dem Verbindungssteg des Profiles sind die Läuferständer (10) befestigt, die auch hier zwischen ihrem Bund und der Gegenscheibe (20) den Läufermagneten (2) mit Gewindedruck einspannen.

Direkt mit dem unteren Flansch (19) ist der Fußflansch des zentralen Kippständers (24) verschraubt, dessen zwei äußeren Säulen den dazwischenliegenden Stator-Trägerring (23) einspannen, der dadurch in jeder Schräglage arretierbar ist.
Hier ist dieser Stator-Trägerring (23) mit dem darin eingepreßten oder verklebten Statormagneten (1) gegen die Kippstellung des Rahmens (3) und damit auch der Rotationsachse (4) in der Horizontalen justiert.

Diese Horizontalstellung des Statormagneten (1) gegen die Neigung der Rotationsachse (4) ergibt die notwendige Niveaudifferenz zwischen zwei 180^{o}-Drehhälften und damit das kontinuierliche gemeinsame gleiche Drehmoment.

Sämtliche Stator-Permanentmagnete (1) und Läufer-Permanentmagnete (2) der Fig. 1 und Fig. 2 sind Magnetringe in der dargestellten Magnetisierung. Alle sonstigen Materialien bestehen aus nichtmagnetischem Material statisch notwendiger Festigkeit.

Fig. 3 zeigt die Abwicklung des Statormagneten (1) aus Fig. 2 mit diametraler Magnetisierung und gleicher Position, und die Bewegungskurve (C) eines Läufermagneten (2).

## Patentansprüche

1. Rotationsvorrichtung mit Permanentmagneten, bei der mindestens zwei Läufermagnete (2) auf je einer Kreisbahn um einen Statormagneten (1) geführt sind, dadurch gekennzeichnet, daß zu jedem Zeitpunkt sich jeweils einer der Läufermagnete (2) unterhalb einer den Statormagneten (1) einschließenden, zu dessen Magnetisierungsrichtung parallelen Nullebene und der andere Läufermagnet (2) sich oberhalb dieser Nullebene befindet.

2. Rotationsvorrichtung nach Anspruch 1, dadurch gekennzeichnet, daß der Abstand der Läufermagneten (2) von der Nullebene durch eine mechanische Steuerung (5 bis 9, 13 bis 16) einstellbar ist.

3. Rotationsvorrichtung nach Anspruch 2, dadurch gekennzeichnet, daß die mechanische Steuerung (5 - 9, 13 - 16) eine geneigte Achse aufweist.

4. Rotationsvorrichtung nach Anspruch 1, dadurch gekennzeichnet, daß der Abstand der Läufermagneten (2) von der Nullebene durch Neigung eines oder mehrerer Magneten (1, 2) erreicht wird.

5. Rotationsvorrichtung nach einem der Ansprüche 1 bis 4, dadurch gekennzeichnet, daß sie mit mindestens einer weiteren Rotationsvorrichtung nach einem der Ansprüche 1 bis 4 gekoppelt ist.

## Claims

1. Rotable apparatus comprising permanent magnets in which each
of at least two rotor magnets (2) is guided on a circular path around one stator magnet (1) in such a manner that one of the rotor magnets (2) is located below a null plane which is parallel to its direction of magnetization and encloses the stator magnet (1) and the other rotor magnet (2) is above said null plane.

2. Rotable apparatus as described in Claim 1, characterized by
the fact that the distance of the rotor magnets (2) from the null plane can be adjusted by means of a mechanic control (5 to 9, 13 to 16).

3. Rotable apparatus as described in Claim 2, characterized by
the fact that the mechanical control (5 - 9, 13 - 16) has an inclined axis.

4. Rotable apparatus as described in Claim 1, characterized by
the fact that the distance of the rotor magnets (2) from the null plane is achieved by inclining one or more magnets (1, 2).

5. Rotable apparatus as described in one of Claims 1 to 4,
characterized by the fact that it is coupled to at least one additional rotable apparatus as described in one of Claims 1 to 4.

## Revendications

1. Dispositif rotatif comprenant des aimants permanents, dans lequel au moins deux aimants rotoriques (2) suivent chacun sur une trajectoire circulaire autour d'un aimant statorique (1), caractérisé en ce qu'à chaque moment, un des aimants rotoriques (2) se trouve sous un plan de référence entourant l'aimant statorique (1) et parallèle au sens de magnétisation de ce dernier et en ce que l'autre aimant rotorique (2) se trouve au-dessus de ce plan de référence.

2. Dispositif rotatif selon la revendication 1, caractérisé en ce que la distance entre les aimants rotoriques (2) et le plan de référence peut être réglée au moyen d'une commande mécanique (5 à 9, 13 à 16).

3. Dispositif rotatif selon la revendication 2, caractérisé en ce que la commande mécanique (5 à 9, 13 à 16) présente un axe incliné.

4. Dispositif rotatif selon la revendication 1, caractérisé en ce que la distance entre les aimants rotoriques (2) et le plan de référence est atteinte par inclinaison d'un ou plusieurs aimants (1, 2).

5. Dispositif rotatif selon l'une des revendications 1 à 4, caractérisé en ce qu'il est couplé à au moins un autre dispositif rotatif conforme à l'une des revendications 1 à 4.
